# EUROPEAN PATENT SPECIFICATION

(11) **EP 1 657 022 B1**
(45) Date of publication and mention of the grant of the patent: **26.03.2008**
(21) Application number: 05024311.2
(22) Date of filing: 08.11.2005
(51) Int. Cl.: B23Q 11/00, B23Q 5/04

(54) **Impact detection device**
Vorrichtung zur Aufprallerkennung
Dispositif d'identification de collision

(30) Priority: 12.11.2004 JP 2004329003
(43) Date of publication of application: 17.05.2006
(73) Proprietor: Fanuc Ltd, Minamitsuru-gun, Yamanashi 401-0597 (JP)
(72) Inventor: Masuya, Michi, Room 14-301, Minamitsuru-gun Yamanashi 401-0511 (JP); Oka, Hideki, Fujiyoshida-shi Yamanashi 403-0005 (JP)
(74) Representative: Schmidt, Steffen J.

(56) References cited:
- WO-A-02/50554
- US-B1- 6 343 242
- PATENT ABSTRACTS OF JAPAN vol. 014, no. 449 (P-1111), 26 September 1990 (1990-09-26) -& JP 02 179479 A (YAMAICHI ELECTRIC MFG CO LTD), 12 July 1990 (1990-07-12)
- PATENT ABSTRACTS OF JAPAN vol. 1995, no. 04, 31 May 1995 (1995-05-31) -& JP 07 006487 A (TOSHIBA CORP), 10 January 1995 (1995-01-10)

## Description

### BACKGROUND OF THE INVENTION

### 1. Field of the Invention

The present invention relates to an impact detection device for detecting when an object, in particular a spindle of a machine tool, collides with another object.

### 2. Description of the Related Art

In a spindle of a machine tool, an arm of a robot, etc., program error, operating error by an operator, etc. sometimes cause unexpected collisions with other objects. If such a collision occurs, at the spindle, robot arm, etc., trouble will be caused at the spindle or robot arm structures themselves or the motors for driving them. Such trouble will have an effect on the processing precision, operating precision, etc. Therefore, when a collision occurs, it is desirable to stop the operation of the machine tool or robot and inspect them.

However, when a machine tool or robot is operating automatically, such collision cannot be detected. Therefore, in spindles of machine tools etc., for example as described in Japanese Unexamined Patent Publication No. 11-296213, taking note of the fact that abnormal vibration occurs in the spindle or the motor driving it when trouble occurs, the practice has been to use a position detector provided at the spindle so as to detect abnormal vibration of the spindle. Further, an impact detection device sometimes has been used in which a vibration sensor is attached to an object and collision is detected utilizing the output of the vibration sensor converted to a digital signal.

Detection of abnormal vibration by a position detector enables detection of occurrence of trouble, but even when the spindle or robot arm experiences trouble, with automatic operation, it is not possible to judge whether or not this was due to a collision. Further, even if an operator is present, this was difficult unless the operator reported the collision himself. Further, when a conventional impact detection device is used, conversion of the continuous analog signal from the vibration sensor to discrete digital signals means sampling at predetermined periods. However, since vibration due to collision has a sharp peak, there has been the problem that if a rapid change of the sensor signal resulting from a collision occurs between the sampling signals instructing the timings of samplings, the vibration due to the collision could not be reliably detected. Further, the conventional impact detection device had a dedicated collision judgment circuit and therefore had the problem of being generally expensive.

WO 02/50554 A discloses an impact detection device which includes a vibration sensor attached to an object, a receiving unit for receiving the output signal from the vibration sensor, a peak hold circuit for holding the largest value in a continuous output signal received by the receiving unit as a peak value, and an output unit for outputting the peak value held by the peak hold circuit.

### SUMMARY OF THE INVENTION

Therefore, an object of the present invention is to solve the above problem of the related art and provide an impact detection device which can reliably detect collision of an object.

Another object of the present invention is to provide an inexpensive impact detection device.

According to the invention, an impact detection device comprises the features of claim 1.

According to the present invention, since the peak hold circuit holds the largest value of the vibration waveform of an output signal from a vibration sensor, even if a collision occurs and the vibration waveform of the object rapidly changes, the information of the peak value of the vibration is reliably maintained by the peak hold circuit. Therefore, if the output from the peak hold circuit is converted from an analog to a digital format, collision can be reliably detected without loss of information of the peak value of the vibration at the time of collision.

### BRIEF DESCRIPTION OF THE DRAWINGS

These and other objects, features, and advantages of the present invention will be described in more detail below based on the preferred embodiments of the present invention with reference to the accompanying drawings, wherein:
FIG. 1 is a view of the overall configuration of an impact detection device according to the present invention;
FIG. 2 is a flow chart of an example of the method of judging whether or not a collision has occurred;
FIGS. 3A to 3C are graphs of examples of the output waveforms from a vibration sensor and peak hold circuit in the impact detection device of FIG. 1; and
FIG. 4 is a graph for explaining an example of analog-digital conversion.

### DETAILED DESCRIPTION

Embodiments of the present invention will be described below with reference to the drawings.

An impact detection device 11 according to the present invention, which is attached to a spindle of a machine tool or an arm of a robot itself or an actuator for driving the same, can detect when the spindle or arm collides with another object. Below, the explanation will be given taking as an example the case of application to a spindle of a machine tool.

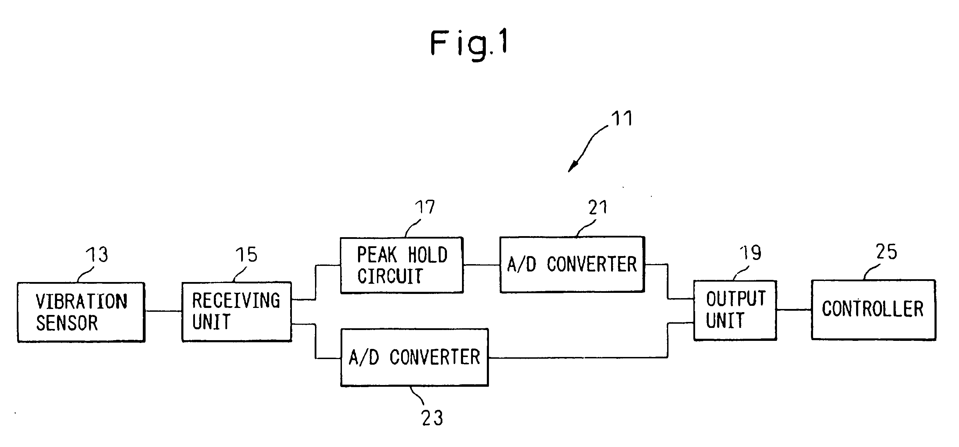

First, referring to FIG. 1, the overall configuration of the impact detection device 11 according to the present invention will be described. The impact detection device 11 includes a vibration sensor 13 adapted to be attached to a spindle of a machine tool, a receiving unit 15 for receiving an output signal from the vibration sensor 13, a peak hold circuit 17 connected to the receiving unit 15, and an output unit 19 for outputting the value held by the peak hold circuit 17 to the outside.

The vibration sensor 13 is a sensor which converts vibration of an object having the sensor attached thereto into voltage and outputs it as an electrical signal. Thus, the vibration sensor 13 outputs a voltage proportional to the amplitude of the object's displacement, speed, or acceleration. Therefore, the output from the vibration sensor 13 is an analog signal. As the vibration sensor 13, for example, a vibration pickup may be used. As the vibration sensor 13 is of a known type, it will not be described in any further detail here.

The receiving unit 15 is adapted to be able to receive an analog signal from the vibration sensor 13 and typically takes the form of an interface to which a signal line from the vibration sensor 13 can be connected, but is not particularly limited in form.

The peak hold circuit 17 is a circuit having a function of holding the largest voltage of the waveform of a continuous output signal (analog signal) received by the receiving unit 15 as a peak value or peak voltage. A general type of peak hold circuit can be used. In the peak hold circuit 17, the held peak voltage generally attenuates along with the elapse of time and becomes smaller. This attenuation rate can be adjusted by modification of the circuit design. As described later, an attenuation rate suitable for the sampling period of the A/D converter can be selected.

The output unit 19 is adapted to be able to output not only the peak potential held by the peak hold circuit 17 or its corresponding digital signal, but also the signal output from the vibration sensor 13 or its corresponding digital signal. However, the output signal from the vibration sensor 13 does not necessarily have to be output through the output unit 19. The output unit 19 is connected to a later described collision judging means through a cable etc. and in general takes the form of an interface to which cables etc. can be connected.

The impact detection device 11 further includes a first A/D converter 21 for converting the signal output from the peak hold circuit 17 expressing a peak potential held by the peak hold circuit 17 from an analog signal to a digital signal, and a second A/D converter 23 for converting the output signal from the vibration sensor 13 received by the receiving unit 15 from an analog signal to a digital signal. As these A/D converters (analog-digital converters) 21, 23 are well-known, they will not be described in detail.

The signal output from the output unit 19 of the thus configured impact detection device 11 is output to a collision judging means. The collision judging means judges whether or not a collision has occurred based on these output signals. In the illustrated embodiment, the collision judging means is a controller 25 of a machine tool. By utilizing the controller 25 of the machine tool as a collision judging means in this way, there is no longer a need to provide a dedicated judgment unit of the impact detection device 11 and the impact detection device 11 can be produced more inexpensively. The controller 25 of the machine tool calculates an average output level of output signals received from the vibration sensor 13 from the output unit via the receiving unit 15 over a predetermined period and judges that collision has occurred when a difference between the calculated average output level and the peak potential held by the peak hold circuit 17 in the signals output from the output unit 19 exceeds a predetermined value.

Preferably, the collision judging means, that is, the controller 25 of the machine tool, has a function of counting time and, when judging that a collision has occurred in the above way, stores the peak potential output at that time from the output unit together with the time in question. This makes it possible to detect when a collision has occurred and use this for analysis of the causes of the collision.

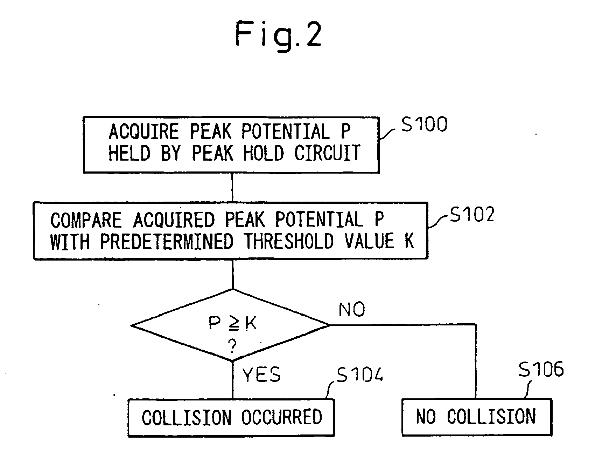

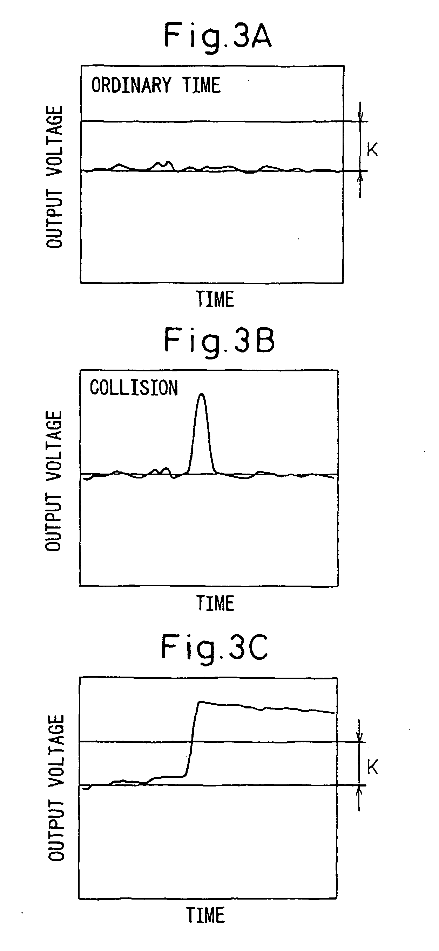

Next, referring to FIG. 2 to FIG. 4, the operation of the impact detection device 11 of FIG. 1 will be described. In the impact detection device 11, the receiving unit 15 continuously acquires the output of the vibration sensor 13 attached to the spindle or the motor for driving it as a continuous signal. The acquired output signal of the vibration sensor 13 is an analog signal and usually is as shown in FIG. 3A. The acquired continuous output signal of the vibration sensor 13 is transmitted to the peak hold circuit 17. The largest voltage presented by the waveform of the series of output signals is held as the peak potential (peak value) P by the peak hold circuit 17. Next, the peak potential P held by the peak hold circuit 17 is converted by the first A/D converter 21 from an analog signal to a digital signal. The collision judging means constituted by the controller 25 of the machine tool acquires the peak potential P held by the peak hold circuit 17 through the output unit 19 as a digital signal (step S100). The controller 25, i. e. the collision judging means, compares the acquired peak potential P with a predetermined value K (step S102) .

When collision does not occur as shown in FIG. 3A, the peak potential P is lower than the predetermined threshold value K and it is thereby judged that collision has not occurred (step S106). Note what the controller 25, i. e. the collision judging means, compares with the threshold value K is strictly speaking the peak potential P after being converted from an analog to digital format, but for simplification of the explanation, here the description will be given of comparing the peak potential P with the threshold value K. The same is true to the description of the comparison with the threshold value K in the controller, i. e. the collision judging means, 25 in the case described below.

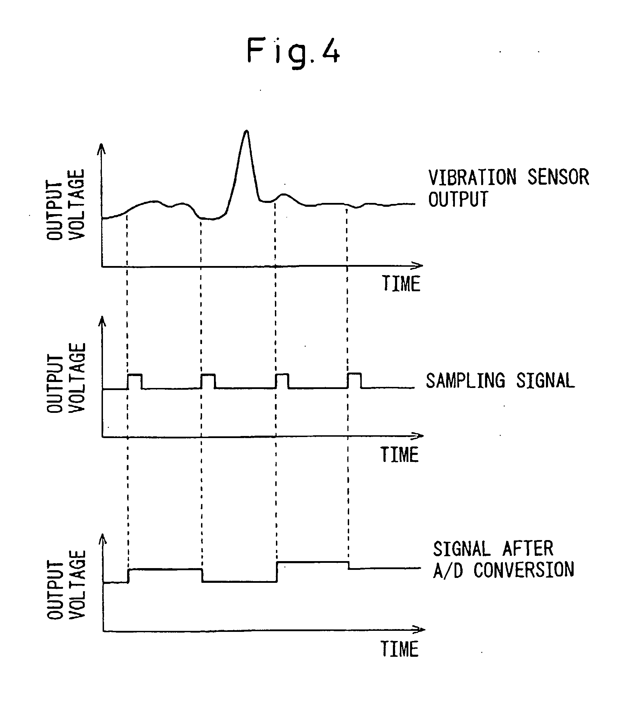

On the other hand, when collision occurs, the output signal of the vibration sensor 13 acquired through the receiving unit 15 exhibits a waveform having a sharp peak such as shown in FIG. 3B. In a general impact detection device 11, the output signal (analog signal) of the vibration sensor 13 is directly converted from an analog to digital format. Therefore, if the output signal of the vibration sensor 13 exhibits a waveform having such a sharp peak, as shown in FIG. 4, the sharp change in output signal due to the collision is concluded between two sampling signals and the sharp change is sometimes no longer reflected in the digital signal after A/D conversion. In this case, even if the voltage at the peak of the waveform where the output signal of the vibration sensor 13 rapidly changed, that is, the peak potential, exceeds a predetermined threshold value K, the signal acquired by the controller, i. e. the collision judging means, 25 of the machine tool can only take a voltage lower than this peak potential and collision can no longer be detected.

However, in the impact detection device 11 according to the present invention, the output signal of the vibration sensor 13 acquired through the receiving unit 15 is transmitted to the peak hold circuit 17. Therefore, the peak hold circuit 17 extracts the peak potential representing the largest voltage exhibited by the waveform of the signal exhibiting a sharp change due to collision as shown in FIG. 3B. As this peak potential is held by the peak hold circuit 17, a signal corresponding to the peak potential P of the output signal of the vibration sensor 13 is generated as shown in FIG. 3C. The thus generated signal is converted by the first A/D converter 21 to a digital signal and then is output to the controller, i. e. the collision judging means, 25 of the machine tool through the output unit 19. The output signal of the peak hold circuit 17 always indicates information corresponding to the peak potential P. As a result, even if this is converted to a digital signal by the first A/D converter 21, regardless of the timing of the sampling signal of the first A/D converter 21, information corresponding to the peak potential P will be reliably transmitted to the controller 25, i. e. the collision judging means, of the machine tool.

Therefore, when the spindle collides, as shown in FIG. 3C, the information of the peak potential P representing the voltage at the peak of the waveform at the time of collision of FIG. 3B is reliably reflected in the digital signal obtained by converting the output signal from the peak hold circuit 17 from an analog to digital format. As a result, the peak potential P acquired by the controller i. e. the collision judging means, 25 from the output unit 19 of the impact detection device 11 exceeds the predetermined threshold value K and the fact that a collision has occurred is judged (step S104).

Note that the peak potential P held by the peak hold circuit 17 strictly speaking gradually attenuates as shown in FIG. 3C due to the characteristics of the circuit. Therefore, preferably, for the peak potential P held by the peak hold circuit 17, the current sampling value is compared with the previous sampling value, and it is judged that collision has occurred when the value of the current sampling is higher than the value of the time of the previous sampling and the value of the time of the current sampling is higher than the threshold value K.

As the attenuation rate of the peak hold circuit 17 can be adjusted by circuit design, the attenuation rate of the peak hold circuit 17 is set so that the peak potential P of the waveform of the output signal of the vibration sensor 13 occurring due to the collision to be detected can still exceed the predetermined threshold value K after the elapse of one sampling period. Alternatively, the threshold value K is set so that even if the peak potential P of the output waveform of the vibration sensor 13 occurring due to the collision to be detected attenuates over one sampling period in accordance with the attenuation rate set for the peak hold circuit 17, the potential after attenuation can exceed the threshold value K. In the latter case, the threshold value K of course has to be set so as to exceed the potential output from the vibration sensor at the time when collision does not occur.

Note that since the attenuation rate of the peak hold circuit 17 is generally small and the sampling period is also extremely small, in practice the peak potential P held during one sampling period is maintained at a constant value. Therefore, it may be deemed that information corresponding to the peak potential P of the output signal generated from the vibration sensor 13 at the time of a collision is output to the controller, i. e. the collision judging means, 25.

In the above embodiment, the controller 25, i. e. the collision judging means, of the machine tool judges whether or not a collision has occurred based on the controller, i. e. the collision judging means, 25 acquires the output signal from the vibration sensor 13 from the output unit 19, calculates the average value of the voltage, compares the difference between that average value and the peak potential P held by the peak hold circuit 17 with a predetermined threshold value K', and judges that collision has occurred when that difference exceeds the threshold value K'. Further, the output signal of the vibration sensor 13 acquired from the output unit 19 may be used for monitoring the state of the spindle.

While the impact detection device 11 according to the present invention has been described above with reference to the illustrated embodiments, it is not limited to the illustrated embodiments. For example, the first A/D converter 21 and the second A/D converter 23 included in the above impact detection device 11 may also be provided on the controller (that is, collision judging means) 25 of the machine tool. Further, in the above embodiments, the controller 25 of the machine tool has been used as the collision judging means. However, the impact detection device 11 may include a collision judging means separate from the controller 25 of the machine tool.

According to the present invention, there is provided an impact detection device which includes a vibration sensor attached to an object, a receiving unit for receiving an output signal from the vibration sensor, a peak hold circuit holding the largest value in a continuous signal received by the receiving unit as a peak value, and an output unit for outputting the peak value held by the peak hold circuit.

The output signal of the vibration sensor has a sharp peak when the measured object collides. As a result, when A/D conversion (analog-digital conversion) is performed to digitalize this output signal by a predetermined sampling period, due to the timing of the sampling, the peak of the signal waveform after A/D conversion sometimes become lower or disappear entirely. Therefore, it is difficult to accurately judge whether or not a collision has occurred based on the output signal of the vibration sensor converted from an analog to digital format. As opposed to this, with the impact detection device according to the present invention, the peak hold circuit holds the peak value of the output signal of the vibration sensor (in general, the peak potential). Therefore, even after collision has occurred, at least for a certain time, the maximum value of the output signal of the vibration sensor at the time of collision is held as a peak value by the peak hold circuit. As a result, it is possible to reliably detect collision from the output value of the peak hold circuit.

In such an impact detection device, the output unit preferably outputs both the peak value and the output signal of the vibration sensor received by the receiving unit. This configuration makes it possible to compare the peak value held by the peak hold circuit with the ordinary value of the output signal from the vibration sensor to thereby judge whether or not the peak value held by the peak hold circuit is abnormal. Further, it is possible to utilize the output signal of the vibration sensor for monitoring the operation of the object.

Further, the impact detection device further includes a collision judging means for judging that a collision has occurred when the peak value output from the output unit exceeds a predetermined value. When an object collides, the amplitude of the vibration of the output signal output from the vibration sensor will become sharply greater. Therefore, if a value not reached by ordinary vibration is preset as the threshold value in the collision judging means, it is possible to judge that a collision has occurred when the maximum value of the output signal of the vibration sensor, that is, the peak value held by the peak hold circuit output from the output unit, exceeds the threshold value.

Such a collision judging means preferably has the function of counting time and can store the peak value together with the time when the peak value exceeds the predetermined value. This configuration makes it possible to learn when a collision occurred.

Further, in the impact detection device, for example, the object may be a spindle of a machine tool and the collision judging means may be a controller of the machine tool.

Further, the impact detection device may be configured so that the output signal from the vibration sensor is an analog signal, the peak hold circuit holds the peak value of the analog signal, and the output unit outputs the received analog signal converted to a digital signal. When an analog signal is converted to a digital signal (A/D conversion), due to the sampling period, part of the information of the analog signal is lost. However, if the analog signal is provided to a peak hold circuit and its peak value is held therein, even if the output of the peak hold circuit is converted from en analog to digital format, the information of the peak value can be reliably output and collision can be reliably detected.

While the present invention has been described above with reference to the preferred embodiments shown in the attached drawings, those embodiments are exclusively illustrative and not intended to limit the invention. Accordingly, the present invention should be solely defined by the scope of claim for patent, and could be variously modified and changed without departing from the scope of claim for patent.

## Claims

1. An impact detection device comprising a vibration sensor (13) attached to an object, a receiving unit (15) for receiving an output signal from said vibration sensor (13), comprising a peak holding means (17) for holding the largest value in a continuous output signal received by said receiving unit (15) as a peak value, and an output unit (19) for outputting the peak value held by said peak holding means (17) as a digital signal, said impact detection device **characterized by** further comprising a collision judging means (25) for calculating an average output level of output signals received from said vibration sensor (13) via said receiving unit (15) over a predetermined period and judging that a collision has occurred when a difference between the calculated average output level and the digitalized peak value output from said output unit (19) exceeds a predetermined value.

## Patentansprüche

1. Eine Stoßerfassungseinrichtung, umfassend:
einen an einem Objekt angebrachten Vibrationssensor (13),
eine Empfangseinheit (15) zum Empfangen eines Ausgabesignals von dem Vibrationssensor (13), welche ein Spitzenwerthaltemittel (17) zum Halten des größten Wertes in einem durch die Empfangseinheit (15) empfangenen kontinuierlichen Ausgabesignal als einen Spitzenwert umfasst, und
eine Ausgabeeinheit (19) zum Ausgeben des durch das Spitzenwerthaltemittel (17) gehaltenen Spitzenwertes als ein digitales Signal, wobei die Stoßerfassungseinrichtung dadurch charakterisiert ist, dass
sie ferner ein Kollisionsbewertungsmittel (25) umfasst, zum Berechnen eines durchschnittlichen Ausgabeniveaus von Ausgabesignalen, die von dem Vibrationssensor (13) über die Empfangseinheit (15) über eine vorbestimmte Dauer empfangen werden, und zum Bewerten, dass eine Kollision aufgetreten ist, wenn eine Differenz zwischen dem berechneten durchschnittlichen Ausgabeniveau und dem von der Ausgabeeinheit (19) ausgegebenen digitalisierten Spitzenwert einen vorbestimmten Wert überschreitet.

## Revendications

1. Dispositif de détection de collision comprenant un capteur de vibrations (13) attaché à un objet, une unité de réception (15) destinée à recevoir un signal de sortie provenant dudit capteur de vibrations (13), comprenant un moyen de maintien de crête (17) destiné à maintenir la valeur la plus élevée dans un signal de sortie continu reçu par ladite unité de réception (15) en tant que valeur crête, et une unité de sortie (19) destinée à délivrer en sortie la valeur crête maintenue par ledit moyen de maintien de crête (17) en tant que signal numérique, ledit dispositif de détection de collision étant **caractérisé en ce qu'**il comprend en outre un moyen de jugement de collision (25) destiné à calculer un niveau de sortie moyen de signaux de sortie reçus provenant dudit capteur de vibrations (13) via ladite unité de réception (15) sur une période prédéterminée et **en ce qu'**il juge qu'une collision a eu lieu quand une différence entre le niveau de sortie moyen calculé et la sortie de valeur crête numérisée provenant de ladite unité de sortie (19) dépasse une valeur prédéterminée.
